# EUROPÄISCHE PATENTSCHRIFT

(11) **EP 1 605 398 B1**
(45) Veröffentlichungstag und Bekanntmachung des Hinweises auf die Patenterteilung: **14.03.2007**
(21) Anmeldenummer: 05019761.5
(22) Anmeldetag: 05.11.1997
(51) Int. Cl.: G06K 19/14

(54) **Verfahren zur Herstellung eines Datenträgers**
Method for producing a data carrier
Procédé de fabrication d'un support de données

(30) Priorität: 14.11.1996 DE 19647154
(43) Veröffentlichungstag der Anmeldung: 14.12.2005
(62) Teilanmeldung aus: 97119325.5
(73) Patentinhaber: Giesecke & Devrient GmbH, 81677 München (DE)
(72) Erfinder: Welling, Ando, Dr., 84424 Isen (DE)
(74) Vertreter: Klunker . Schmitt-Nilson . Hirsch

(56) Entgegenhaltungen:
- DE-A- 2 307 482
- DE-A- 4 441 198

## Beschreibung

Die Erfindung betrifft ein Verfahren zur Herstellung eines Datenträgers.

Datenträger, wie z. B. Ausweiskarten, Bank- oder Kreditkarten werden in den verschiedensten Bereichen des täglichen Lebens eingesetzt. Beispielsweise dienen sie der Identifizierung des Inhabers oder der Durchführung bargeldloser Transaktionen. Es ist deshalb von größter Bedeutung, derartige Datenträger mit besonderen Sicherheitsmerkmalen zu versehen, so daß eine Fälschung derartiger Datenträger in größtmöglichem Maße erschwert und eine Verfälschung einfach erkannt wird.

Aus der EP 0 219 012 A1 ist beispielsweise ein mehrschichtiger Datenträger mit einer transparenten Deckfolie bekannt, in welche ein Oberflächenrelief in Form einer Linsenstruktur, bevorzugt ein Zylinderlinsenraster, eingebracht ist. Durch dieses Linsenraster hindurch werden mittels eines Lasers Informationen in darunterliegende Volumenbereiche des Datenträgers eingebracht, die als geschwärzte Bereiche visuell gut zu erkennen sind. Aufgrund der Focuswirkung der Linsen werden nur schmal begrenzte Bereiche des Datenträgers geschwärzt, so daß die Informationen lediglich unter dem Betrachtungswinkel beobachtet werden können, der dem Einfallswinkel des Lasers auf die Linsenstruktur entspricht. Auf diese Weise können bei Verwendung verschiedener Beschriftungswinkel mehrere nur unter bestimmten Betrachtungswinkeln erkennbare Informationen eingeschrieben werden. Dieser Effekt wird im folgenden als "Kippbild" bezeichnet.

Dieses Kippbild besitzt eine Reihe von sicherheitstechnisch relevanten Vorteilen. So ist es beispielsweise weder mit fotografischen noch mit kopiertechnischen Mitteln reproduzierbar, da unter einem Aufnahmewinkel nie gleichzeitig alle Kippbild-Informationen vorliegen. Der gefälschte Datenträger zeigt somit lediglich eine der Informationen und diese unter allen Betrachtungswinkeln. Der Kippbildeffekt ist verschwunden. Zudem bietet die Laserbeschriftung einen zusätzlichen Fälschungsschutz. Denn bei der Laserbeschriftung werden im Inneren des Datenträgermaterials sichtbare Veränderungen hervorgerufen, die weder chemisch noch mechanisch ohne vollständige Zerstörung des Datenträgers entfernt oder geändert werden können.

Dieses Sicherheitsmerkmal bietet auch bezüglich der wirtschaftlichen Herstellung von Datenträgern einige Vorteile. Denn die Beschriftung des Linsenrasterbereichs erfolgt erst nach der Fertigstellung des Datenträgers, so daß hierbei eventuell anfallender Ausschuß nicht beschriftet und daher komplizierte Abläufe für ein nachträgliches Herstellen eines neuen Datenträgers mit dem gleichen Datensatz vermieden werden. Dies gilt insbesondere für den Fall, daß die Kippbildinformation benutzerbezogen ausgeführt ist.

Die Herstellung der Linsenstruktur erfolgte bisher entweder während der Herstellung des Datenträgers oder nach seiner Fertigstellung durch Einprägen mit einem Prägestempel. Durch die Erhitzung des Datenträgermaterials und den hierauf ausgeübten Druck kommt es allerdings leicht zu irreparablen Verzügen und zu störenden Durchprägungen auf die Datenträgerrückseite, die häufig als Druckfläche benutzt wird.

Um diesen Nachteil zu beseitigen, wurde in der WO 96/15912 bereits vorgeschlagen, Verzüge des Datenträgers durch stufenweises Steuern von Temperatur und Druck zu vermeiden. Hierfür ist jedoch eine entsprechende Steuerung des Stempels notwendig, was zu erheblichen Verlängerungen der Taktzeiten führt. Dieser Nachteil kann durch parallel arbeitende Mehrfachstempelsysteme abgefangen werden. Allerdings sind derartige Systeme aufwendig hinsichtlich der benötigten mehrfachen Mechanik und des Platzbedarfes.

Der vorliegenden Erfindung liegt daher die Aufgabe zugrunde, eine einfachere Vorrichtung zur Herstellung von Datenträgern mit einer Oberflächenstruktur vorzuschlagen, die aber dennoch Verzüge des Datenträgers vermeidet.

Diese Aufgabe wird durch die in den unabhängigen Ansprüchen gekennzeichneten Merkmale gelöst. Vorteilhafte Weiterbildung und Ausführungsformen ergeben sich aus den abhängigen Ansprüchen.

Die Erfindung beruht auf dem Grundgedanken, durch entsprechendes Ausbilden des Randbereiches von Prägewerkzeugen die Auswirkungen des Prägevorgangs für einen Datenträger auf die Ausbildung einer Prägestruktur zu begrenzen und sekundäre Effekte zu minimieren bzw. zu eliminieren.

Dies hat den Vorteil kurzer Taktzeiten, bei gleichzeitiger Vermeidung von Verzügen auf der Rückseite und von Verwölbungen im Übergangsbereich zwischen Oberflächenstruktur und Karte, so daß ein kontinuierlicher Übergang entsteht.

In einer bevorzugten Ausführungsform liegt die Oberflächenstruktur innerhalb der Kartenoberfläche und der Prägestempel ist rundumlaufend abgeschrägt, wobei der Winkel der Abschrägung vorzugsweise 10 bis 30 Grad beträgt.

Alternativ kann auch das Gegenlager rundumlaufend abgeschrägt sein.

Weitere Vorteile und vorteilhafte Ausgestaltung der vorliegenden Erfindung ergeben sich aus der nachfolgenden Beschreibung bevorzugter Ausführungsbeispiele anhand der Figuren.

Es zeigen:
- Fig.1: eine Aufsicht eines Datenträgers,
- Fig. 2: eine Schnittansicht entlang Linie A-B von Fig. 1 einer Vorrichtung mit Prägestempel und Gegenlager,
- Fig. 3: eine Schnittansicht einer bevorzugten Ausführungsform eines erfindungsgemäßen Prägestempels,
- Fig. 4: eine Schnittansicht eines Prägestempels mit Ultraschall-Sonotrode und
- Fig. 5: einen Datenträger während eines erfindungsgemäßen lokalen Rückbiegeschrittes.

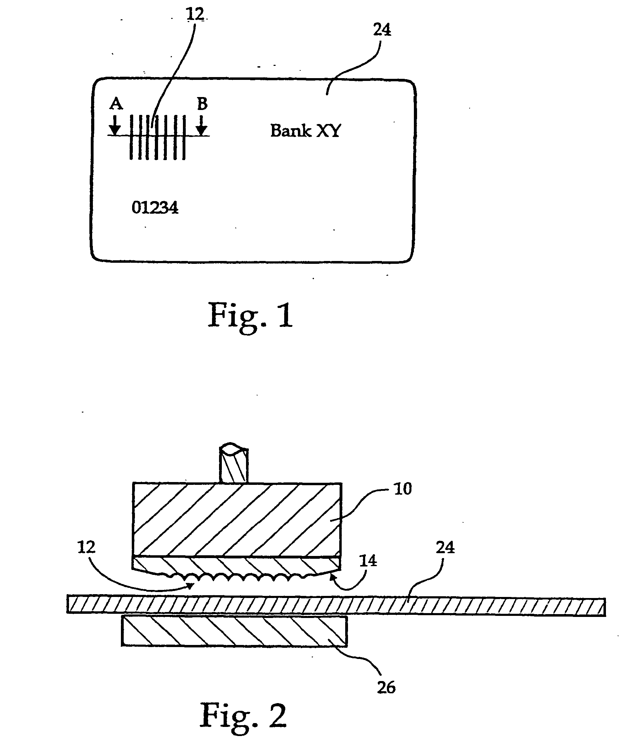

Fig.1 zeigt einen Datenträger 24 mit einer Linsenstruktur 12 und verschiedenen weiteren aufgebrachten Informationen.

Fig. 2 zeigt eine Schnittansicht entlang der Linie A-B von Fig.1 eine Vorrichtung zum Herstellen einer Prägestruktur auf einem Datenträger 24. Die Vorrichtung umfaßt einen Prägestempel 10 mit einzuprägender Linsenstruktur 12 und ein Gegenlager 26. Der Stempel 10 wird von oben auf den Datenträger 24 aufgepreßt und ggf. geheizt, so daß sich das Negativrelief 12 in dem Datenträger 24 abdrückt. Der Stempel 10 ist in einem rundumlaufenden Randbereich 14 abgeschrägt.

Beim Aufsetzen dieses Prägestempels 10 auf eine zu behandelnde Oberfläche des Datenträgers 24 wird durch die Abschrägung 14 das Material besser verteilt, so daß es zu keiner Wulstbildung am umlaufenden Rand des Prägestempels auf der Datenträgeroberfläche kommt und entsprechende Verformungen bzw. Verwölbungen des Datenträgers vermieden werden. Die Abschrägung 14 verläuft vorzugsweise um den gesamten umlaufenden Rand des Prägestempels 10 und bildet so eine umlaufende Phase 14. Dies gewährleistet eine gleichmäßige Verteilung des verdrängten Materials an der Oberfläche des behandelten Datenträgers.

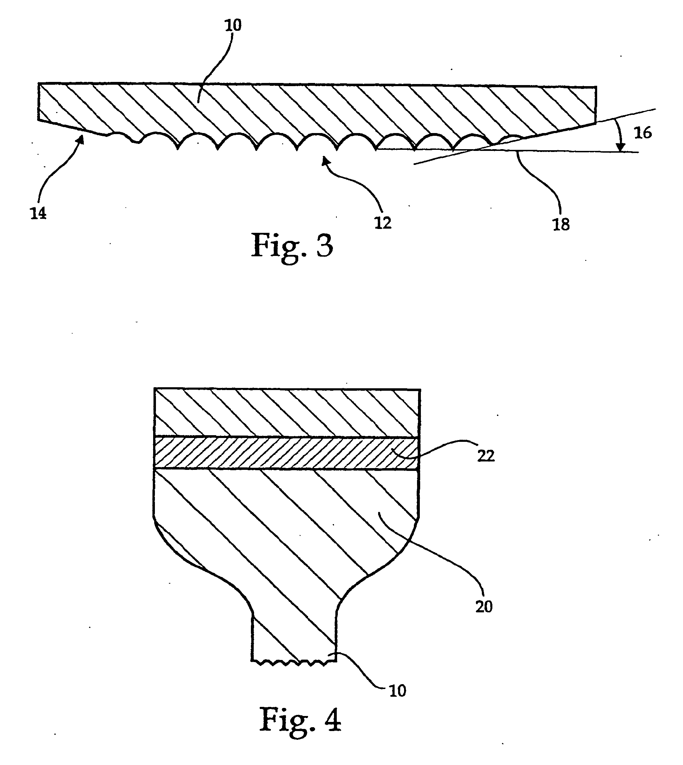

Fig. 3 zeigt in einer vergrößerten Schnittansicht den unteren Teil des Prägestempels 10 von Fig.1, der mit einer Linsenstruktur 12 auf seiner Oberfläche versehen ist. Diese Oberfläche ist mit einer gedachten Linie 18 angedeutet.

Im Randbereich ist der erfindungsgemäße Prägestempel 10 mit einer Abschrägung 14 ausgebildet. Diese Abschrägung schließt mit der Linie 18 der gedachten Oberfläche den Winkel 16 ein.

Diese Abschrägung reduziert den Druck auf den Datenträger 24 im Randbereich des Prägestempels 10. Dadurch werden Verwölbungen, insbesondere auf der Rückseite des Datenträgers 24, bereits beim Prägevorgang vermieden. Unmittelbar nach dem Prägevorgang kann ein praktisch unverbogener bzw. unverwölbter Datenträger 24 ohne weitere notwendige Behandlungsschritte bezüglich der Verwölbung entnommen werden.

Hierbei sind insbesondere Prägekräfte in der Größenordnung von 10 KN/cm² vorteilhaft.

Fig. 4 zeigt eine weitere erfindungsgemäße Ausführungsform eines Prägestempels 10. Dieser ist zusätzlich mit einer Sonotrode 20 ausgerüstet, die an einem Piezokristall 22 befestigt ist. Die Sonotrode 20 wirkt als Übersetzung, insbesondere des Drucks, vom Piezokristall 22 auf den Prägestempel 10. Das Einprägen einer Linsenstruktur in einen Datenträger benutzt dabei grundsätzlich zwei Effekte:
1. Es entsteht an einem Berührungspunkt zwischen Datenträgeroberfläche und Spitzen des Stempels 10 eine Mikroreibung, die zu einer entsprechenden Erwärmung des Kunststoffes führt.
2. Es wird die Struktur des Stempels 10 durch die oszillierende Bewegung des Prägestempels 10 an der Sonotrode 20 aufgrund des von dem Piezokristall 22 erzeugten Ultraschalls sozusagen eingetrieben. Dies erzeugt zusätzlich hohe Druckspitzen an den Berührungspunkten zwischen Datenträger und Prägestempel 10.

Beim Heißprägen ohne Ultraschall wird häufig folgender Effekt beobachtet:

Die durch den Stempel ausgebildeten Wülste der Linsen federn beim Abnehmen des Stempels von der Oberfläche zurück. Dies führt zu einer Reduzierung der Genauigkeit der ausgebildeten Linsengeometrie und entsprechend zu optischen Verzerrungen bei Betrachtung eines Kippbildes durch diese Linsenstruktur. Durch hohe Frequenzen mit geringem Hub des oszillierenden Prägestempels 10 kann mit der Ultraschalltechnik dieses Zurückfedern vermindert bzw. beseitigt werden, so daß die ausgebildeten Linsenstrukturen eine sehr genaue, gewünschte Geometrie aufweisen.

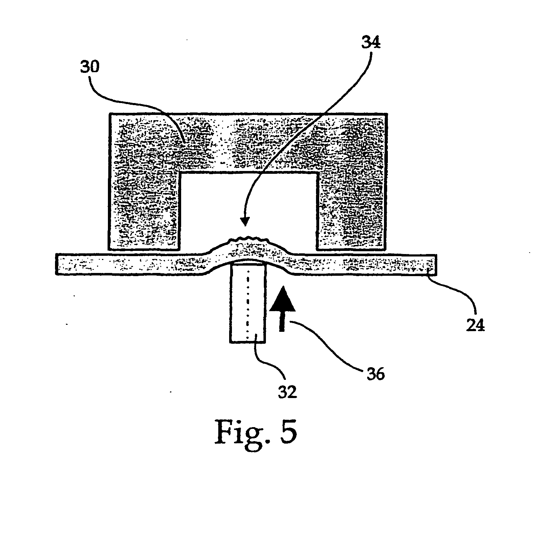

Wie in Fig. 5 dargestellt, ist es erfindungsgemäß ebenso vorgesehen, nach dem Prägevorgang einen Rückbiegeschritt nur lokal in einem Bereich des Datenträgers 24 auszuführen, in dem zuvor ein Prägeschritt erfolgte. Hierbei liegt der Datenträger 24 an einem Anschlag 30 an und ein Biegestempel 32 drückt in Pfeilrichtung 36 auf den Datenträger 24 in einem lokalen, vorbestimmten Bereich, in dem zuvor eine Linsenstruktur 34 aufgeprägt wurde. Selbstverständlich sind bezüglich der Ausbildung von Anschlag 30 und Biegestempel 32 auch andere geeignete Konfigurationen als die in Fig. 5 beispielhaft dargestellten möglich.

Der Rückbiegeschritt wird bevorzugt während der Abkühlphase des Datenträgers 24 nach einem Prägeschritt ausgeführt.

Zur nachträglichen Beseitigung einer lokalen Verwölbung wird erfindungsgemäß ferner vorgeschlagen, den verwölbten Bereich 34 gleichmäßig zu erwärmen und wieder abkühlen zu lassen. Durch Erwärmen des Materials, z. B. über Infrarotlicht, bis zur Plastizitätsgrenze wird eine Tendenz des Materials des Datenträgers 24 erzeugt, bei der sich dieses Material ausdehnen möchte. Da der Umgebungsbereich des verwölbten Bereichs 34 jedoch nicht erwärmt wird, ist eine Ausdehnung nur in Form einer dicken Änderung möglich. Beim Abkühlen zieht sich das Material gleichmäßig zusammen und glättet dabei lokale Verwölbungen.

In besonders bevorzugter Weise, werden die eben geschilderten Temperaturbehandlungsschritte mit den zuvor in Zusammenhang mit Fig. 5 beschriebenem Rückbiegeschritt kombiniert, so daß eine optimale Verminderung bzw. Entfernungen von Verwölbungen auf dem Datenträger 24 erreicht wird.

## Patentansprüche

1. Verfahren zur Herstellung eines Datenträgers (24), beispielsweise einer Ausweiskarte, Chipkarte oder dergleichen, wobei eine Oberflächenstruktur in Form einer Linsenstruktur (12) in einem Prägeschritt unter stufenweiser Beaufschlagung mit Temperatur und/ oder Druck eingeprägt wird, wobei das Dokument nach dem Prägeschritt einem zusätzlichen Biegeschritt unterzogen wird, **dadurch gekennzeichnet, daß** in dem zusätzlichen Schritt ein vorbestimmter Bereich des Dokuments, in dem der Prägeschritt stattgefunden hat, während einer Abkühlphase gebogen wird.

2. Verfahren zur Herstellung eines Datenträgers (24), beispielsweise einer Ausweiskarte, Chipkarte oder dergleichen, wobei eine Oberflächenstruktur in Form einer Linsenstruktur (12) in einem Prägeschritt unter stufenweiser Beaufschlagung mit Temperatur und/ oder Druck eingeprägt wird, wobei das Dokument nach dem Prägeschritt einem zusätzlichen Wärmebehandlungsschritt unterzogen wird, **dadurch gekennzeichnet, daß** in dem zusätzlichen Schritt ein vorbestimmter Bereich des Dokuments, in dem der Prägeschritt stattgefunden hat, lokal erwärmt und wieder abgekühlt wird.

## Claims

1. A method for producing a data carrier (24), for example an identity card, chip card or the like, whereby a surface structure in the form of a lens structure (12) is embossed under the gradual action of temperature and/or pressure in an embossing step, whereby the document is subjected to an additional bending step after the embossing step, **characterized in that**, in the additional step, a predetermined area of the document in which the embossing step has taken place is bent during a cooling phase.

2. A method for producing a data carrier (24), for example an identity card, chip card or the like, whereby a surface structure in the form of a lens structure (12) is embossed under the gradual action of temperature and/or pressure in an embossing step, whereby the document is subjected to an additional heat treatment step after the embossing step, **characterized in that**, in the additional step, a predetermined area of the document in which the embossing step has taken place is locally heated and cooled again.

## Revendications

1. Procédé de fabrication d'un support de données (24) comme par exemple une carte d'identité, une carte à puce ou similaire, dans lequel une structure de surface sous forme d'une structure de lentille (12) au cours d'une étape d'estampage, est estampée, par étages, sous l'effet de la chaleur et/ou de la pression et dans lequel le document, après l'étape d'estampage, est soumis à un étape supplémentaires de flexion, **caractérisé en ce que** dans l'étape supplémentaire, une zone prédéterminée du document où l'étape d'estampage a eu lieu est pliée pendant la phase de refroidissement.

2. Procédé de fabrication d'un support de données (24) comme par exemple une carte d'identité, une carte à puce ou similaire, dans lequel une structure de surface sous forme d'une structure de lentille (12) au cours d'une étape d'estampage, est estampée, par étages, sous l'effet de la chaleur et/ou de la pression et dans lequel le document, après l'étape d'estampage, est soumis à un étape supplémentaires de traitement thermique, **caractérisé en ce que** dans l'étape supplémentaire, une zone prédéterminée du document où l'étape d'estampage a eu lieu est localement chauffée et de nouveau refroidie.
